# EUROPEAN PATENT APPLICATION

(11) **EP 4 852 552 A1**
(43) Date of publication of application: **09.12.2026**
(21) Application number: 25757577.9
(22) Date of filing: 16.01.2025
(51) Int. Cl.: H04W 68/02

(54) **COMMUNICATION METHOD AND APPARATUS**

(30) Priority: 23.02.2024 CN 202410205602
(71) Applicant: Honor Device Co., Ltd., Shenzhen, Guangdong 518040 (CN)
(72) Inventor: TANG, Xiaoxuan, Shenzhen, Guangdong 518040 (CN)
(74) Representative: Gill Jennings & Every LLP
(86) International application number: PCT/CN2025/072681
(87) International publication number: WO 2025/175980

(57) **Abstract**

This application provides a communication method and an apparatus. In a process in which a network side (for example, an access network side or a core network side) pages UE, if the network side determines that a current paging status meets an alert triggering policy, an access network device sends an alert message to the UE. The alert message is used to indicate that the UE is being paged, thereby improving UE reachability.

## Description

This application claims priority to Chinese Patent Application No. 202410205602.4, filed with the China National Intellectual Property Administration on February 23, 2024 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

When a terminal is placed in a space such as a pocket, schoolbag, vehicle, or ship, or when clutter loss occurs, the terminal may enter an environment with an unfavorable signal-to-noise ratio (Signal-to-Noise Ratio, SNR). In such an environment, the terminal may fail to receive a paging message from a network side, that is, a paging arrival rate is low.

### SUMMARY

In view of this, this application provides a communication method and an apparatus, to resolve at least some of the foregoing problems. The disclosed technical solutions are as follows:
According to a first aspect, this application provides a communication method, applied to a core network device, and the method includes: sending, to at least one access network device, alert-related information related to UE, where the alert-related information is used by the at least one access network device to send an alert message to the UE when it is determined that paging of the UE fails. It can be learned that, according to this solution, when paging of the UE fails, the access network device may send an alert message to the UE, thereby improving UE reachability.

In a possible implementation of the first aspect, the alert-related information includes an alert command, and the alert command is used to instruct the access network device to send the alert message. For example, when the core network device determines that an alert message needs to be sent to the UE, the core network device may send an alert command to the access network device, and the access network device sends the alert message to the UE in response to the alert command. In this solution, a core network may make a decision by comprehensively considering information reported by all radio access network devices in an area in which the UE is located, so as to avoid a false alert caused by measuring, based on paging information of only one access network device, whether an alert triggering policy is met (for example, paging of the UE fails because the access network device itself is faulty). This reduces a false alert rate.

In a possible implementation of the first aspect, the alert command is sent by the core network device after determining that paging of the UE fails. For example, after determining that paging of the UE fails, the core network device sends an alert command to the access network device, where the command is used to trigger the access network device to send an alert message to the UE.

In a possible implementation of the first aspect, the alert-related information further includes an alert reporting condition, the alert reporting condition is used to trigger the access network device to send a UE no-response indication to the core network device, and the alert reporting condition includes at least one of the following: a number of paging times is greater than a first threshold, or no reply from the UE is received within first preset duration. In this way, whether to trigger an alert procedure may be determined based on information reported by a plurality of access network devices in a same area, thereby reducing a false alert rate.

In a possible implementation of the first aspect, sending alert-related information to at least one access network device in an area in which the UE is located includes: when it is determined that paging of the UE meets a first alert triggering policy, sending, by the core network device, the alert command to the at least one access network device in the area in which the UE is located. In this way, after determining that a current paging status of the UE meets the first alert triggering policy, the core network device sends the alert command to the at least one access network device in the area in which the UE is located. In this way, a plurality of access network devices in the area may send the alert message to the UE, which improves a success rate of receiving the alert message by the UE.

In a possible implementation of the first aspect, the first alert triggering policy includes at least one of the following: a total number of paging times is greater than or equal to a second threshold, a number of paging attempts is greater than or equal to a third threshold, no reply from the UE is received within second preset duration, a paging attempt area is unreachable, or a maximum number of sending times applies, where the total number of paging times is a sum of numbers of paging times of all access network devices in the area in which the UE is located, and the maximum number of sending times is used to limit a number of times of sending an alert message to the UE. It can be learned that, after detecting that the current paging status meets a condition in the first alert triggering policy, a core network side triggers the access network device to send the alert message to the UE. In this way, whether to trigger an alert procedure may be determined based on information reported by a plurality of access network devices in a same area, thereby reducing a false alert rate.

In a possible implementation of the first aspect, the alert-related information further includes a maximum number of sending times, and the maximum number of sending times is used to limit a number of times of sending an alert message to the UE. In this way, interference to another access network device in the same area can be reduced, and a network resource can be saved.

In a possible implementation of the first aspect, the first alert triggering policy further includes that a paging cause is a voice service or important paging. In this way, signaling overheads can be reduced. In addition, in this solution, an alert procedure is triggered only for voice paging or important paging, and no alert is triggered for paging of another service type. In this way, other UEs in the cell do not receive such alerts. Therefore, a number of times of receiving an alert message by other UEs is reduced. That is, a false alert probability is reduced.

In a possible implementation of the first aspect, the alert-related information further includes power information, and the power information includes a specified transmit power, a transmit power level, or a transmit power ramp-up step. In this way, after the core network device delivers the alert-related information to the access network device, the access network device may increase, based on the power information, transmit power for sending the alert message, thereby improving a success rate of receiving the alert message by the UE.

In a possible implementation of the first aspect, the alert-related information includes a second alert triggering policy, the second alert triggering policy is used to enable the access network device to decide whether to send an alert message to the UE, and the second alert triggering policy includes at least one of the following: a number of paging times is greater than or equal to a fourth threshold, no reply from the UE is received within third preset duration, or a number of paging attempts is greater than or equal to an expected number of paging attempts. In another scenario, the core network device may send an alert triggering policy to the access network device, so that the access network device determines, based on the policy, whether to trigger an alert procedure. This can reduce workload on the core network, decrease a number of times of information exchange between the access network device and the core network device, and improve efficiency in sending the alert message.

In a possible implementation of the first aspect, the second alert triggering policy further includes that a paging cause is a voice service or important paging.

According to a second aspect, this application further provides a communication method, applied to an access network device, and the method includes: receiving alert-related information sent by a core network device, and sending an alert message to UE, where the alert-related information is used by at least one access network device to send an alert message to the UE when it is determined that paging of the UE fails. In this solution, when paging of the UE fails, the access network device may send an alert message to the UE, to indicate that the UE is being paged, thereby improving UE reachability.

In a possible implementation of the second aspect, the alert-related information includes an alert command, and the access network device sends an alert message to the UE based on the alert command sent by the core network device.

In a possible implementation of the second aspect, the alert-related information further includes an alert reporting condition, and the alert reporting condition includes at least one of the following: a number of paging times is greater than a first threshold, or no reply from the UE is received within first preset duration.

In a possible implementation of the second aspect, the access network device sends a UE no-response indication to the core network device after it is determined that the alert reporting condition is met, where the UE no-response indication includes at least one of the following: no response from the UE, or a number of paging times. In this way, the core network device may comprehensively consider information reported by each access network device to determine whether to trigger an alert procedure, so as to avoid a false alert caused by measuring, based on paging information of only one access network device, whether an alert triggering policy is met. This reduces a false alert rate.

In a possible implementation of the second aspect, the alert-related information includes an alert triggering policy, and the alert triggering policy includes at least one of the following: a number of paging times is greater than a second threshold, no reply from the UE is received within second preset duration, or a number of paging attempts is greater than or equal to an expected number of paging attempts minus 1. The expected number of paging attempts herein is an existing parameter of the core network device, that is, the existing parameter is reused to trigger an alert procedure, thereby reducing workload and complexity of configuring a new parameter.

In a possible implementation of the second aspect, the alert-related information further includes a maximum number of sending times, and the maximum number of sending times is used to limit a number of times of sending the alert message to the UE.

In a possible implementation of the second aspect, the receiving the alert-related information sent by the core network device, and sending the alert message to the UE includes: sending, by the access network device, the alert message when it is determined that the alert triggering policy is met.

In a possible implementation of the second aspect, a process of determining that the alert triggering policy is met includes: determining a number of paging times for which a paging message is sent to the UE and no reply from the UE is received, where the number of paging times is greater than or equal to the paging times threshold; and/or no response from the UE is received after the second preset duration has elapsed since a start of paging of the UE; and/or receiving a number of paging attempts sent by the core network device, where the number of paging attempts is greater than or equal to the expected number of paging attempts minus 1 (Expected number of paging attempts - 1).

In a possible implementation of the second aspect, the sending the alert message to the UE includes: adjusting a transmit power based on power information, and sending the alert message by using an adjusted transmit power.

In a possible implementation of the second aspect, the power information includes a specified transmit power, a transmit power level, or a transmit power ramp-up step.

In a possible implementation of the second aspect, the adjusting the transmit power based on the power information, and sending the alert message by using the adjusted transmit power includes: sending the alert message by using the specified transmit power; or sending the alert message by using a transmit power corresponding to the transmit power level; or successively increasing a transmit power based on the power ramp-up step, until an enhanced transmit power reaches a maximum specified power, or a number of times of enhancing the transmit power reaches a maximum specified number of times, or a reply from the UE is received.

In a possible implementation of the second aspect, the sending the alert message to the UE includes: sending the alert message at a preset position. In this way, the alert message is sent at the preset position, so that the UE monitors the alert message at the preset position.

In a possible implementation of the second aspect, the preset position includes a reference position and an offset; and the reference position is a reference position determined based on a start position of a 1^{st} paging frame in one paging, and the offset is an offset from the reference position to a start frame of a 1^{st} monitoring occasion in an alert slot; or the reference position is a reference position determined based on an end position of a last paging frame in one paging, and the offset is an offset from the reference position to an end frame of the 1^{st} monitoring occasion in an alert slot; or the reference position is a reference position determined based on a position of a system information block SIB1, and the offset is an offset from the reference position to an alert slot. In such a manner of determining, by using the reference position and the offset, the position for sending the alert message, the alert message is monitored based on the agreed position, thereby improving resource utilization.

In a possible implementation of the second aspect, the preset position is a preset fixed time domain position, a fixed frequency domain position, or a fixed code domain position.

In a possible implementation of the second aspect, before the sending the alert message to UE, the method further includes: sending alert configuration information to the UE.

In a possible implementation of the second aspect, the alert configuration information includes: a monitoring position related configuration and a UE-related index, where the monitoring position related configuration is used to indicate a position at which the UE monitors the alert message, and the UE-related index is used to indicate UE that receives the alert configuration information. In this way, the UE monitors the alert message based on a monitoring position specified in the monitoring position related configuration, to avoid paging the UE all the time, thereby saving a network resource.

In a possible implementation of the second aspect, the UE-related index includes at least one of the following: an inactive radio network temporary identifier I-RNTI, a preconfigured UE index, a cell radio network temporary identifier C-RNTI, or an area index. A receiver of the alert configuration information is indicated by using the UE-related index.

In a possible implementation of the second aspect, the monitoring position related configuration is sent by using a system message, or the monitoring position related configuration is sent by using first dedicated signaling; and the UE-related index is sent by using second dedicated signaling.

According to a third aspect, this application further provides a communication method, applied to user equipment, and the method includes: receiving an alert message sent by an access network device, where the alert message is sent by the access network device when a network side device determines that paging of the UE fails, and the network side device includes the access network device or a core network device.

In a possible implementation of the third aspect, the method further includes: monitoring the alert message at a preset position.

In a possible implementation of the third aspect, the monitoring the alert message at the preset position includes: monitoring the alert message when it is detected that signal quality of a serving cell is less than a preset threshold; or monitoring the alert message when it is detected that a radio access network notification area update or routing area update periodically fails. In this way, the UE monitors the alert message at a configured monitoring position only after detecting that a current status meets this condition, thereby reducing power consumption of the UE.

In a possible implementation of the third aspect, the method further includes: receiving alert configuration information sent by the access network device, where the alert configuration information includes a monitoring position related configuration and a UE-related index.

In a possible implementation of the third aspect, the method further includes: sending first information to the access network device or the core network device, where the first information is used to indicate that the UE is capable of receiving an alert message.

In a possible implementation of the third aspect, after the receiving the alert information sent by the access network device, the method further includes at least one of the following: initiating, to a network side device, a request for restoring a connected state; or indicating, to an upper layer, that an alert message is received, where the upper layer triggers an application feedback, and the application feedback includes at least one of the following: vibration or information display.

According to a fourth aspect, this application further provides a network side device, including a memory and one or more processors. The memory is configured to store program code, and the processor is configured to run the program code, so that the electronic device implements the communication method according to any implementation of the first aspect or the second aspect.

According to a fifth aspect, this application further provides user equipment, where the electronic device includes: a memory and one or more processors. The memory is configured to store program code, and the processor is configured to run the program code, so that the electronic device implements the communication method according to any implementation of the third aspect.

According to a sixth aspect, this application further provides a computer-readable storage medium, where the computer-readable storage medium stores instructions. When the instructions are run on a network side device, the network side device is enabled to perform the communication method according to any implementation of the first aspect or the second aspect. When the instructions are run on user equipment, the user equipment is enabled to perform the communication method according to any implementation of the third aspect.

According to a seventh aspect, this application further provides a chip, including: at least one processor and an interface. The interface is configured to receive a code instruction, and transmit the code instruction to the at least one processor, and the at least one processor runs the code instruction, to implement the communication method according to any implementation of the first aspect or the second aspect.

According to an eighth aspect, this application further provides a chip, including: at least one processor and an interface. The interface is configured to receive a code instruction, and transmit the code instruction to the at least one processor, and the at least one processor runs the code instruction, to implement the communication method according to any implementation of the third aspect.

According to a ninth aspect, this application further provides a computer program product, where an executable program is stored in the computer program product. When the computer program product is run on an electronic device, the electronic device is enabled to implement the communication method according to any implementation of the first aspect, any implementation of the second aspect, or any implementation of the third aspect.

### BRIEF DESCRIPTION OF THE DRAWINGS

FIG. 1 is a schematic diagram of a structure of a communication system according to an embodiment of this application;
FIG. 2 is a flowchart of a communication method according to an embodiment of this application; and
FIG. 3A and FIG. 3B are a flowchart of another communication method according to an embodiment of this application.

### DESCRIPTION OF EMBODIMENTS

Terms "first", "second", "third", and the like in the specification, claims, and drawings of this application are used to distinguish between different objects rather than to limit a specific order.

In embodiments of this application, terms such as "example" or "for example" are used to represent giving examples, illustrations, or descriptions. Any embodiment or design scheme described as "example" or "for example" in embodiments of this application shall not be explained as being more preferred or having more advantages than another embodiment or design scheme. In particular, the terms such as "exemplary" and "example" as used herein are intended to present the related concept in a specific implementation.

A communication method provided in this application may be applied to various communication systems, for example, a fifth generation (5th generation, 5G) or new wireless (new radio, NR) system, a Long Term Evolution (long term evolution, LTE) system, an LTE frequency division duplex (frequency division duplex, FDD) system, and an LTE time division duplex (time division duplex, TDD) system. The solution may also be applied to a future communication system, such as a sixth generation (6th generation, 6G) mobile communication system. The solution may also be applied to device-to-device (device to device, D2D) communication, vehicle-to-everything (vehicle-to-everything, V2X) communication, machine-to-machine (machine to machine, M2M) communication, machine-type communication (machine type communication, MTC), and internet of things (internet of things, IoT) communication systems or other communication systems.

The communication method provided in this application may be used in a terrestrial network (Terrestrial Network, TN) communication system or a non-terrestrial network (Non Terrestrial Network, NTN) communication system.

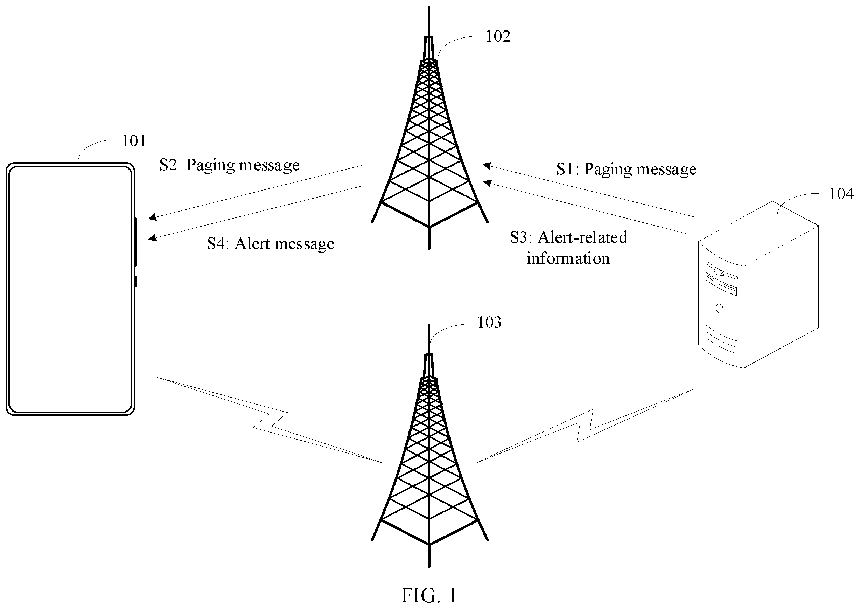

FIG. 1 is a schematic diagram of a communication system according to an embodiment of this application.

As shown in FIG. 1, the communication system includes at least one user equipment (user equipment, UE) 101 (such as a mobile phone), at least one radio access network device 102 and 103 (such as a base station), and at least one core network device 104. In the communication system, the UE 101 may send uplink data to the radio access network device 102 or 103, and the radio access network device 102 or 103 may send the uplink data from the UE 101 to the core network device. In addition, the core network device 104 may send downlink data to the radio access network device 102 or 103, and further, the radio access network device 102 or 103 may send the downlink data to the UE 101.

The user equipment UE in embodiments of this application may be a device that provides voice or data connectivity for a user. The user equipment may be referred to as terminal equipment (terminal equipment), a mobile station (mobile station), a subscriber unit, a subscriber station, a mobile station, a mobile terminal (mobile terminal, MT), a remote station, a remote terminal, a mobile device, a user terminal, a terminal, a wireless communication device, a user agent, or a user apparatus. The terminal may be a cellular phone (cellular phone), a personal digital assistant (personal digital assistant, PDA), a wireless modem (modem), a handheld device (handheld), a laptop computer (laptop computer), a cordless phone (cordless phone), a wireless local loop (wireless local loop, WLL) station, a tablet computer (pad), or the like. With development of wireless communication technologies, a device that can access a wireless communication network, communicate with a wireless network side, or communicate with another object via a wireless network may be the terminal in embodiments of this application, for example, a terminal or a vehicle in intelligent transportation, a household device in a smart home, an electric meter reading instrument, a voltage monitoring instrument, or an environment monitoring instrument in a smart grid, a video monitoring instrument or a cash register in a smart security network. The terminal may be static or mobile. A type of the terminal is not limited in this application. In addition, the terminal device may also be a terminal device in an Internet of things (Internet of things, IoT) system.

The access network (Access Network, AN) device in embodiments of this application may be a device, configured to support the terminal in accessing a communication system, on an access network side, or may be a chip disposed in the device. The access network device can manage a radio resource, provide an access service for the user equipment, and further complete forwarding of a control signal and user equipment data between the user equipment and a core network. The access network device may be a radio access network (Radio Access Network, RAN) device. The access network device may be an evolved node (evolved NodeB, eNB), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, WIFI) system, a wireless relay node, a wireless backhaul node, or a transmission point (transmission and reception point, TRP or transmission point, TP); or may be a gNB or a transmission point (TRP or TP) in a 5G system, or one antenna panel or a group of antenna panels (including a plurality of antenna panels) in a base station in a 5G system, or a network node that constitutes a gNB or a transmission point, such as a BBU or a distributed unit (distributed unit, DU), or may be a node or unit with a corresponding function in a future 6G system. This is not limited herein.

In a satellite communication scenario, the radio access network device may also be referred to as a radio satellite access network station (or radio satellite access network device or a wireless satellite access network), a satellite access network station (or a satellite access network device or a satellite access network), or a satellite network station (or a satellite network device or a satellite network). This is not limited in embodiments of this application. The satellite access network may be deployed in a plurality of manners. For example, a same PLMN has both a terrestrial 3GPP access network and a satellite 3GPP access network, and the two access networks have separate interfaces with the core network. For another example, different core networks share a same satellite access network, and the shared satellite access network includes an available PLMN in broadcast system information. For another example, a terrestrial access network and a satellite access network are separate, that is, the terrestrial access network and the satellite access network correspond to separate PLMNs. For another example, a satellite in the sky is responsible only for signal transmission and does not have a function of accessing a network, and in this scenario, the satellite access network may also be referred to as satellite backhaul. In the foregoing non-satellite-backhaul scenarios, the satellite may include all or a part of functions of an access network, which is not limited in this application. When all functions of the base station are integrated into a satellite, the satellite access network device may be understood as a device with a part of functions of a base station on the satellite, and all signaling and data processing related to the access network are performed on the satellite. When a part of functions of a base station are integrated on the satellite and a part of functions are located on the ground, the satellite access network device may be understood as a device with a part of functions of the base station on the satellite and a device with a part of functions of the base station on the ground, and related signaling and data processing of the access network are performed partially on the satellite and partially on the ground. During satellite backhaul, the satellite access network device may be understood as a base station on the ground. All signaling and data processing related to an access network is performed on the ground. The satellite transparently transmits signaling and data between the terminal device and the satellite access network.

The core network (Core Network, CN) device in embodiments of this application may be connected to one or more access network devices, and may provide one or more functions of session management, access authentication, Internet Protocol (internet protocol, IP) address allocation, and data transmission for the terminal in the communication system. For example, the core network device may be a mobility management entity (mobile management entity, MME) or a serving gateway (serving gateway, SGW) in a 4G system, or an access and mobility management function (access and mobility management function, AMF) network element or a user plane performance (user plane function, UPF) network element or the like in a 5G system, or may be, for example, a network node with a similar function in a future 6G system. This is not limited herein. The core network device may also be referred to as a core network element.

As described above, when the UE is in an environment with an unfavorable SNR, the UE may fail to receive a paging message sent by a network side, that is, the UE cannot enter a connected state in time and eventually the UE misses the paging message. That is, the UE cannot receive the paging message in time.

Paging (Paging) is a process, initiated by the network side, of searching for UE. When the network side needs to send signaling or data to the UE but the UE is not in the connected state, the network side cannot directly send data to the UE. A purpose of paging is to notify the UE that the network side has signaling or data to send to the UE. After receiving the paging message, the UE may actively trigger an action, and the UE actively establishes a connection relationship with the network side, so that the UE enters the connected state. In this way, signaling or data can be sent and received between the UE and the network side.

To resolve a problem that UE misses a paging message, this application proposes a communication method. For example, in the communication system shown in FIG. 1, the communication method may include the following steps.

S1: A core network device sends a paging message to a radio access network device.

The UE is currently in a non-connected state (for example, the UE is in an idle state or an inactive state), and a network side has downlink data to send to the UE. In this case, the core network device 104 sends a paging message to the radio access network device 102 or 103. An example in which the core network device 104 sends the paging message via the radio access network device 102 is used for description herein.

S2: The radio access network device sends the paging message to the UE.

S3: The core network device sends alert-related information to the radio access network device.

The alert-related information herein may include an alert triggering policy, an alert reporting condition, or an alert command, which is described in detail in subsequent embodiments.

S4: The radio access network device sends an alert message to the UE.

After a network device (for example, the radio access network device or the core network device) determines that the alert triggering policy is met, the radio access network device sends the alert message (or referred to as a notification message, an enhanced paging message, a robust paging message, a robust paging notification, a robust notification message, a paging alert message, a forced paging message, or the like) to the UE, where the alert message is used to indicate that the UE is being paged.

After receiving the alert message, the UE may reconnect to the network side, which may include, for example, at least one of the following: initiating radio resource control (Radio Resource Control, RRC) connection restoration or an RRC access or service request (service request) or the like, or indicating to an upper layer application of the UE that an alert/notification message has been received, where an application layer triggers ringing or screen display, to invite a user to move to an environment with a better SNR. This improves UE reachability.

In some embodiments, in the communication method provided in this application, whether to send the alert message to the UE may be determined by the radio access network device. This method may be applied to a communication system including one or more network nodes (such as one or more radio access network devices in a communication network), and performed by one or more network nodes (such as a network node last serving the UE) in the communication system.

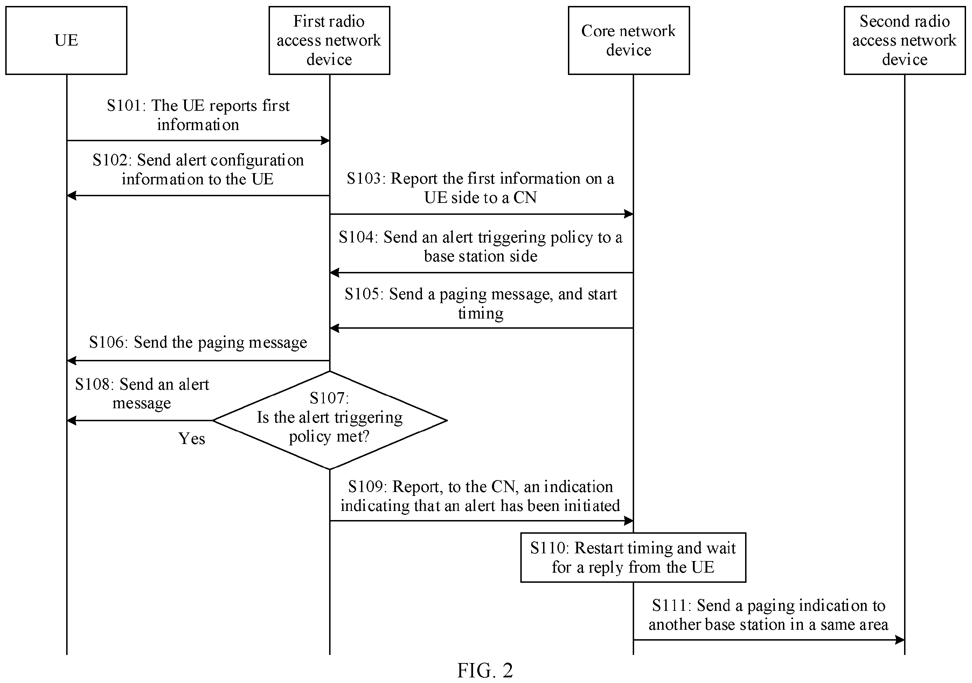

As shown in FIG. 2, a communication method provided in embodiments may include the following steps.

S101: UE sends first information to a first radio access network device.

The first information herein is used to indicate that the UE can receive an alert-related message (related to alert message).

In some embodiments, the UE may add the first information to a registration request message sent to the first radio access network device (for example, a gNB in a 5G system). Alternatively, the UE sends the first information via dedicated signaling. For example, the first information may be specifically an RRC message or a non-access stratum (Non Access Stratum, NAS) message.

In addition, the first information reported by the UE may further include power information, for example, a power that can be received by the UE. If a paging message sent by the network side to the UE cannot reach the UE, the alert message sent by the network side may also fail to reach the UE. To improve an arrival rate of the alert message, the network side may increase a transmit power. For example, the network side may increase the transmit power based on the power information reported by the UE.

S102: The first radio access network device sends alert configuration information to the UE.

In some embodiments, the alert configuration information may be specified in a protocol or preconfigured in the radio access network device.

In some embodiments, the alert configuration information may include at least one of the following: a configuration for an alert message monitoring position and a UE-related index. The UE-related index is used to identify UE that receives the alert configuration information.

In some embodiments, the alert configuration information is sent to the UE via a system message, or dedicated signaling, or a broadcast message. For example, the dedicated signaling may be an RRC release message or an RRC release message with suspend configuration.

In a scenario in which the alert configuration information is sent via dedicated signaling, the configuration for the alert message monitoring position may be carried in the RRC signaling. Alternatively, the UE-related index may be carried in non-access stratum NAS signaling.

The configuration for the alert message monitoring position is used to inform the UE of a specific position to monitor for presence of the alert message. For example, the monitoring position may include a reference point and an offset, which are described in detail subsequently. Details are not described herein again. In this way, after monitoring the alert message at the monitoring position, the UE does not need to parse information at another position in the message, thereby reducing power consumption of the UE.

The UE-related index may include any one of the following: an inactive radio network temporary identifier (Inactive-Radio Network Temporary Identifier, I-RNTI), a cell radio network temporary identifier (Cell-Radio Network Temporary Identifier, C-RNTI), or a UE index allocated by a higher layer (for example, a core network device).

All UEs camping on a same cell may receive a message sent by the network side. Each UE may determine, based on a UE index carried in the message, whether the message is sent to the UE itself. Specifically, whether the UE index in the message is consistent with an index of the UE is compared. If the UE indexes are consistent, it indicates that the message is sent to the UE itself. If the UE indexes are inconsistent, it indicates that the message is not sent to the UE itself and is discarded.

In this embodiment, the radio access network device sends the alert configuration information to the UE after receiving the first information reported by the UE. In another embodiment of this application, the alert configuration information may be sent to the UE after the paging message is sent. Time for sending the alert configuration information is not limited in this application, provided that the alert configuration information is sent before the radio access network device sends the alert message to the UE.

S103: The first radio access network device reports the first information to the core network device.

After receiving the first information reported by the UE, the first radio access network device continues to report the first information to the core network device, so that a core network side determines, based on the first information, whether the UE supports reception of the alert message.

S104: The core network device sends an alert triggering policy to the radio access network device.

For example, a related policy of the alert message, that is, the alert triggering policy (or referred to as an alert trigger condition or an alert triggering event), may be specified in a protocol and/or determined by the core network device.

In some embodiments, the alert triggering policy may include at least one of the following: a number of paging times is greater than or equal to a specified threshold (or referred to as a fourth threshold), or no reply from the UE is received within preset duration (or referred to as a third preset duration). The specified threshold and the preset duration herein may be configured by a network, specified in a protocol, or the like.

In this embodiment of this application, the number of paging times is a number of times the first radio access network device (for example, a base station) sends a paging message to the UE. It can be learned that the number of paging times is a number, counted from a perspective of the base station, of paging the UE. When receiving a paging message from the core network side, an access network side may initiate paging a plurality of times. Each time of paging initiated by the access network side is counted in the number of paging times.

"No reply from the UE is received within preset duration" means that no reply from the UE is received after the preset duration has elapsed since a start of paging of the UE. The reply may be a service request message or a message 3 (Message 3, Mg3), where Mg3 may be specifically: RRCSetupRequest, RRCReestablishmentRequest, RRCResumeRequest, or the like.

In some embodiments, an alert timer maintained by an access network side device may be set. The alert timer starts timing when the access network side initiates paging. If the timing expires, an alert procedure is triggered. If a response from the UE is received in a timing process, timing is stopped.

In a scenario, the alert triggering policy includes only that the number of paging times is greater than or equal to the specified threshold. In this scenario, the first radio access network device counts a number of times of sending a paging message to the UE (that is, the number of paging times), and if the number of paging times is greater than the specified threshold, determines that the alert triggering policy is met. Then, an alert procedure is triggered, that is, an alert message is sent to the UE.

In another scenario, the alert triggering policy includes only that no reply from the UE is received within the preset duration. In this scenario, when detecting that the alert timer expires, the first radio access network device triggers an alert procedure.

In still another scenario, the alert triggering policy includes that the number of paging times is greater than or equal to the specified threshold and that no reply from the UE is received within the preset duration. In this scenario, after detecting that the number of paging times of the UE exceeds the specified threshold and the alert timer expires, the first radio access network device triggers an alert procedure.

In some embodiments, the alert triggering policy may further include a paging cause, such as an indication for high-priority paging: For example, the paging is related to a voice service or is important paging (for example, paging from numbers such as 110, 119, and 120). In this scenario, the access network side measures whether the alert triggering policy is met only in the case of voice or important paging, and only a problem of a low arrival rate of high-priority paging needs to be resolved. In this way, signaling overheads can be reduced. In addition, in this solution, an alert procedure is triggered only for voice paging or important paging, and no alert is triggered for paging of another service type. In this way, other UEs in the cell do not receive such alerts. Therefore, a number of times of receiving an alert message by other UEs is reduced. That is, a false alert probability is reduced. In addition, the paging cause may be specified in a protocol, or may be directly written into a configuration of the radio access network device. This is not limited in this application.

In some embodiments, a maximum number of sending times may be further set. The maximum number of sending times refers to a maximum number of times the access network side can send an alert message when the same UE fails to be paged. For example, if the maximum number of sending times is 3, the access network side sends an alert message a maximum of three times to the UE for a paging failure of the same UE. Configuring the maximum number of sending times reduces interference to another access network device in a same area, and saves a network resource. The maximum number of sending times may be specified in a protocol (for example, the access network side may configure the maximum number of sending times according to the protocol) or is determined by the core network device and sent to the access network device.

S105: The core network device sends a paging message to the first radio access network device, and starts a first timer or determines a paging message sending frequency.

Timing duration of the first timer is a time interval at which the core network side re-initiates paging to the UE. For example, in an NR system, the first timer may be a T3513 timer.

The paging message sending frequency may refer to a time interval, for example, 10 ms, at which the core network side sends a paging message to a same UE for two consecutive times.

The paging message may include paging (paging), a paging cause, and the like.

In some embodiments, the alert triggering policy and the paging message may be separately sent to the access network side. For example, after receiving the first information of the UE reported by the access network side, the core network side sends the alert triggering policy to the access network side.

In some other embodiments, the alert triggering policy and the paging message may be sent to the access network side synchronously. For example, the alert triggering policy may be carried in the paging message, or the alert triggering policy and the paging message may be sent synchronously as two messages to the access network side.

Time at which the core network device sends the alert triggering policy is not limited in this application.

S106: The first radio access network device sends the paging message to the UE.

After receiving the paging message sent by the core network device and parsing it to obtain corresponding UE information and specific content, the first radio access network device sends the paging message to the UE.

S107: The first radio access network device detects whether a current paging status meets the alert triggering policy. If yes, S108 is performed. If no, the first radio access network device continues to monitor whether the alert triggering policy is met.

In an application scenario, an alert is triggered only when the paging cause is related to a voice service or important paging. In this scenario, after determining that the paging message sent by the core network includes an indication indicating that the paging cause is related to the voice service or important paging, the access network side measures whether another alert triggering policy is met, for example, whether the number of paging times exceeds the specified threshold and/or whether the alert timer expires, and whether the number of alerts reaches the maximum number of sending times. If all alert triggering policies configured in the alert triggering policy are met, the alert message is sent to the UE.

In some embodiments, an expected number of paging attempts is configured on the core network side, and configuring this parameter can avoid paging the UE all the time, thereby saving a network resource. In this scenario, the access network side may directly trigger an alert procedure by using the expected number of paging attempts and a current number of paging attempts returned by the core network, that is, the access network side sends the alert message to the UE after detecting that the current number of paging times is greater than or equal to (Expected number of paging attempts - 1). For example, the expected number of paging attempts configured on the core network side is 5, and the core network device may send a current number of paging attempts (for example, the current paging is the fourth paging attempt) to the access network side. The access network side determines that the current number of paging attempts is equal to (Expected number of paging attempts - 1), and triggers an alert procedure. In addition, the core network device needs to send, to the access network side in advance, indication information used to instruct the access network side to trigger an alert procedure based on the expected number of paging attempts. In this way, when determining that the current number of paging attempts is greater than or equal to (Expected number of paging attempts - 1), the access network side triggers an alert procedure. For example, the core network device may send the indication information and the configured expected number of attempts to the access network side in advance, or they may be carried in a paging message and sent to the access network side. This is not limited. Each time the core network device sends the paging message, the core network device may carry the current number of paging attempts, or certainly may send the current number of paging attempts to the access network side after a specific number of paging attempts is reached. For example, the expected number of paging attempts is 5, and a paging message at the third paging attempt or the fourth paging attempt carries the current number of paging attempts.

S108: The first radio access network device sends an alert message to the UE.

The radio access network device may send the alert message at an agreed position. The position may be specified by a protocol or configured by the core network side. A position for sending the alert message is not limited in this application.

The alert message may include the UE-related index or an alert index. The alert index is used to identify the alert message. After obtaining the alert index by parsing, the UE may determine specific content of the alert message based on a mapping relationship between the alert index and alert message content.

In some embodiments, after receiving the alert message, the UE directly initiates, based on processing logic, RRC connection restoration, RRC access, a service request (service request), or the like. Optionally, the UE may use the alert message as a cause for initiating the RRC connection restoration, the RRC access, or the service request.

In some other embodiments, after receiving the alert message sent by the access network side, the UE (that is, a modem in the UE) may indicate to an upper application layer (that is, an application program in the UE) that the alert message is received. Optionally, after receiving the indication, the application program triggers the UE to feed back the alert message to the user, for example, to perform vibration, and/or display or play the alert message on a screen, so that a user learns of the alert message in time.

In some embodiments, the alert message may include related information for inviting the user to move to an environment with a better SNR. For example, the UE displays, to the user, text information for inviting the user to move to an environment with a better SNR.

S109: The first radio access network device reports, to the core network device, an indication indicating that an alert has been initiated.

After sending the alert message to the UE, the access network side reports, to the core network side, indication information indicating that the alert message has been sent.

As described above, for a current paging failure, the access network side may send the alert message to the UE a plurality of times. In this scenario, after sending the alert message to the UE for the first time, the access network side may immediately report, to the core network side, the indication information indicating that the alert message has been sent. Alternatively, the indication information indicating that the alert has been initiated may be reported to the core network side only after the alert message is sent for the last time. This application imposes no limitation on a time at which the base station reports, to the core network device, the indication indicating that the alert has been initiated.

S110: After receiving the indication indicating that the alert has been initiated, the core network device restarts timing and waits for a reply from the UE.

In some embodiments, after receiving the indication reported by the access network side and indicating that the alert has been initiated, the core network side may suspend the first timer, to avoid a misoperation due to expiration of the first timer. Then, the first timer may be restarted, that is, the first timer may be suspended and reset to restart timing. If the first timer expires before a reply (a service request sent by the UE, or Mg3) from the UE is received, S111 may be performed. If a reply from the UE is received before the first timer expires, timing is stopped.

Alternatively, in some other embodiments, after receiving the indication reported by the access network side and indicating that the alert message is sent to the UE, the core network side suspends the first timer and starts a new timer. S111 is performed after the new timer expires. If no reply from the UE is received after the new timer expires, S111 is performed. If a reply from the UE is received before the new timer expires, timing is stopped.

S111: The core network device delivers a paging indication to another radio access network device in the same area.

The area herein may include a radio access network-based notification area (RAN-based Notification Area, RNA), a tracking area (tracking area, TA), registration notification area (registration notification area), a cell list, one or more TAs (a plurality of TAs configured for a same satellite in an NTN network), a last serving (last serving) cell, a last serving (last serving) satellite, and the like.

In some embodiments, the paging indication is only used to instruct the access network side to page the UE, and in this case, if the core network side has not received a reply from the UE within a specific time (for example, the core network side has not received a reply from the UE after sending a paging message once, or has not received a reply from the UE within a specific period of time after one or more paging messages), the core network side instructs other radio access network devices in the same area to page the UE together.

In some other embodiments, the paging indication includes indication information (for example, an alert command, alert command) that instructs the access network side to initiate an alert to the UE, and after receiving the indication, another radio access network device in the area sends an alert message to the UE. A plurality of radio access network devices in the same area are used to page the UE or send alert messages together, so that UE reachability can be improved.

In some embodiments, the access network side may increase a transmit power for sending the alert message, to increase a probability that the UE successfully receives the alert message, that is, improve UE reachability. For example, the access network side may increase the transmit power based on power information. For example, the power information may include a specified transmit power, a transmit power ramp-up step, a transmit power level, and the like. The power information may be specified in a protocol, or indicated by the core network side, or determined by the access network side (for example, determined based on a receivable power reported by the UE) or obtained by the access network side based on implementation logic. For example, the receivable power information of the UE may be reported by using auxiliary information to the network side, for example, the access network side or the core network side.

In a possible implementation, the power information is a specific transmit power, and the access network side sends the alert message to the UE by using the specific transmit power.

In another possible implementation, the power information is a transmit power ramp-up step, and the access network side determines, based on the number of paging times and the transmit power ramp-up step, a transmit power for sending the alert message. For example, when the alert triggering policy is met, the access network side increases the transmit power ramp-up step based on an original transmit power (or referred to as a first transmit power), to obtain a second transmit power, and sends the alert message by using the second transmit power. If no reply is received for the alert message sent this time (that is, the access network side has not received a reply from the UE), the access network side increases the transmit power ramp-up step based on the second transmit power to obtain a third transmit power, and sends the alert message by using the third transmit power until a reply from the UE is received or the maximum number of sending times is reached or the maximum specified power is reached.

In still another possible implementation, the power information is a transmit power level, and when the access network side determines that an alert message needs to be sent to the UE, the access network sends the alert message to the UE by using a power corresponding to the transmit power level.

FIG. 2 shows a specific implementation. In actual application, steps that need to be performed may be determined based on an actual application scenario. In other words, steps in FIG. 2 are not all necessary steps. For example, in the same area, the alert configuration information needs to be sent to the UE only once, without a need to send the alert configuration information each time of paging. Similarly, the alert triggering policy needs to be sent only once, without a need to be sent in each paging process.

According to the communication method provided in this embodiment, when paging of the UE fails, the access network side measures whether the current paging status meets the alert triggering policy, and if the current paging status meets the alert triggering policy, the access network side sends the alert message to the UE. In addition, if the core network side has not received a reply from the UE, the core network side instructs other radio access network devices in the same area to initiate alerts or paging to the UE together, thereby improving UE reachability.

Further, in the method, the access network side can measure whether the alert triggering policy is met only in a case of voice paging or important paging, so that signaling overheads can be reduced. In addition, in this solution, an alert procedure is triggered only for voice paging or important paging, and no alert is triggered for paging of another service type. In this way, other UEs in the cell do not receive such alerts. A number of times of receiving an alert message by other UEs is reduced. That is, a false alert probability is reduced. Further, in this solution, the transmit power for sending the alert message by the base station can be increased, thereby improving UE reachability.

In some other embodiments, in the communication method provided in this embodiment of this application, whether to send the alert message to the UE may be determined by the core network side device. This embodiment may be applied to a scenario that includes a plurality of cells or satellite cells.

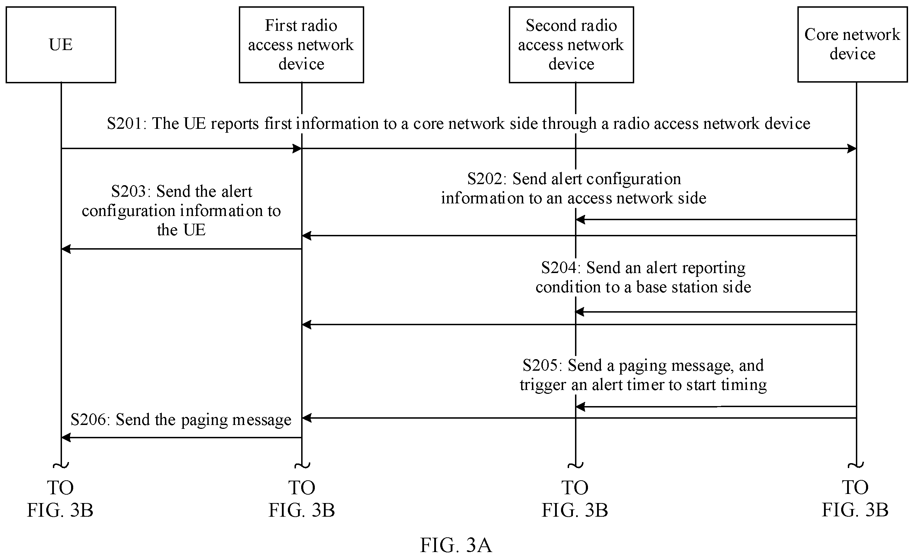

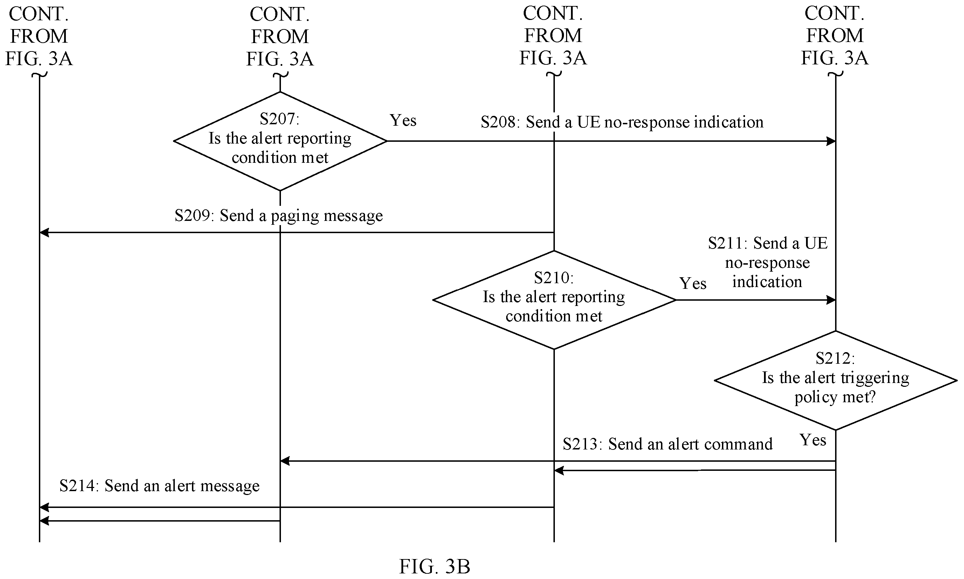

As shown in FIG. 3A and FIG. 3B, a communication method provided in embodiments may include the following steps.

S201: UE reports first information to a core network device through a radio access network device.

In some embodiments, the UE reports the first information to an access network side (for example, the first radio access network device and the second radio access network device shown in FIG. 3A and FIG. 3B), and the access network side reports the first information to the core network side device.

In some other embodiments, the UE may directly report the first information to the core network side.

In an example embodiment, the UE may include the first information in a registration request message when sending the registration request message to the access network side.

S202: The core network device sends alert configuration information to at least one radio access network device in a same area.

In some embodiments, the area may include any one of the following: a tracking area (tracking area, TA), a registration notification area, a cell list, one or more TAs (a plurality of TAs configured for a same satellite in an NTN network), a last serving (last serving) cell, a last serving (last serving) access network node, and the like.

In this example, an example in which the area includes the first radio access network device and the second radio access network device is used for description. For example, the core network device separately sends the alert configuration information to the first radio access network device and the second radio access network device. In actual application, the area may include more radio access network devices, and the core network device separately sends the alert configuration information to each radio access network device in the area. A number of base stations in the area is not limited in this application.

The alert configuration information may include at least one of the following: a configuration for an alert message monitoring position and a UE-related index. The UE-related index may be any one of an I-RNTI, a UE index, a group index, or an area index (the area index corresponds to a preconfigured/predefined area). The alert configuration information herein is the same as the alert configuration information in S102, and details are not described herein again.

In some embodiments, the core network device may send the alert configuration information to the access network side via a system message, or send the alert configuration information via dedicated signaling, or send the alert configuration information in a broadcast manner. A manner of sending the alert configuration information is not limited in this application.

S203: The radio access network device sends the alert configuration information to the UE.

A specific implementation process of this step is the same as the process described in S102 in FIG. 2, and details are not described herein again.

S204. The core network device separately sends an alert reporting condition to each access network device in a same area.

The alert reporting condition refers to a condition under which the access network side reports a UE no-response indication to the core network side.

The UE no-response indication may include information such as UE unreachable, a number of paging times, and whether a last serving cell or satellite is used.

The alert reporting condition may include at least one of the following: the number of paging times is greater than or equal to a specified threshold (or referred to as a first threshold), or no reply from the UE is received within specified duration (or referred to as first preset duration).

The number of paging times is a number of times a current access network device pages the UE. For example, each time after receiving a paging message delivered by the core network side, the first radio access network device may send the paging message to the UE a plurality of times, for example, three times, and the core network side sends the paging message to the first radio access network device once in total. In this case, the number of paging times of the first radio access network device is 3. Herein, the first radio access network device is merely used as an example for description, and another radio access network device in the area performs a same processing procedure. Details are not described herein again.

"No reply from the UE is received within specified duration (for example, 2s)" means that the access network device does not receive any reply (for example, a service request or Mg3 message sent by the UE) from the UE after the specified duration has elapsed since a start of paging of the UE.

In some embodiments, the access network device may maintain a timer, start timing when sending the paging message to the UE, and stop the timing if a reply from the UE is received in a timing process. If no response from the UE is received after the timer expires, the access network device sends the UE no-response indication to the core network side.

S205: The core network device sends a paging message to one or more access network devices in the same area, and starts an alert timer.

The paging message may include paging (paging), a paging cause, and the like.

In this embodiment, the alert timer is used to determine whether a condition for no reply from the UE within preset duration is met, which is an implementation manner. In another embodiment of this application, alternatively, it may be directly determined, based on time information for sending the paging message and a time interval for the paging message, whether no reply from the UE is received within the preset duration.

S206: The first radio access network device sends the paging message to the UE.

After receiving the paging message from the core network side, the radio access network device may send the paging messages to the UE a plurality of times.

S207: The first radio access network device determines whether the alert reporting condition is met. If yes, S208 is performed. If no, checking whether the alert reporting condition is met is continued.

For example, in this embodiment of this application, if the access network device determines that a number of times this device sends the paging message to the UE reaches a specified threshold, and/or determines that this device has not received a reply from the UE within a specified time from a time when the paging message is sent to the UE, it is determined that the alert reporting condition is met.

S208: The first radio access network device sends a UE no-response indication to the core network side.

S209: The second radio access network device sends the paging message to the UE.

S210: The second radio access network device determines whether the alert reporting condition is met. If yes, S211 is performed. If no, checking whether the alert reporting condition is met is continued.

S211: The second radio access network device sends a UE no-response indication to the core network side.

A process of S209 to S211 is the same as a process shown in S206 to S208, and details are not described herein again.

S212: The core network device determines whether a current state meets an alert triggering policy. If yes, S213 is performed. If no, checking whether the alert triggering policy is met is continued.

The alert triggering policy (or referred to as an alert trigger condition or an alert triggering event) is a condition for triggering an alert procedure on the core network side, that is, a procedure of triggering delivery of an alert message to the UE when it is detected that the current state meets a preset condition.

The alert triggering policy may be specified in a protocol or determined by the core network device.

In some embodiments, the alert triggering policy may include at least one of the following: a total number of paging times (that is, a sum of a number of paging times of a plurality of base stations) exceeds a specified threshold (or referred to as a second threshold), a number of paging attempts (that is, a number of paging attempts) exceeds a specified threshold (or referred to as a third threshold), no reply from the UE is received within preset duration (or referred to as second preset duration), or a paging attempt area is unreachable.

In some embodiments, the threshold for the number of paging attempts may be a number of times newly configured or defined by the core network side, or may be an existing parameter (for example, Expected number of paging attempts - 1) of the core network side. The expected number of paging attempts may be carried in the paging message and delivered to the access network side. The expected number of paging attempts is originally used to limit a number of times the core network side pages the UE, so as to prevent the core network side from constantly paging the UE, thereby saving a network resource. In this embodiment of this application, (Expected number of paging attempts - 1) may be further used as the threshold for the number of paging attempts in the alert triggering policy. The core network side determines, based on the expected number of paging attempts, whether to trigger an alert procedure. For example, the expected number of paging attempts configured on the core network side is 5, and when the number of paging attempts counted by the core network side is greater than or equal to 4, an alert procedure is triggered, that is, an alert command is sent to the access network side.

In this embodiment of this application, the number of paging attempts is a number of times the core network device sends the paging message to the access network side to page the UE. The number of paging attempts is a number of times of paging the UE, counted from a perspective of the core network device. In a process of paging specific UE, the core network device may send a paging message to a plurality of access network devices in a same area, and this process is counted as one time of paging. Therefore, the number of paging attempts is usually less than the number of paging times.

The area may include at least one of a tracking area (tracking area, TA), registration notification area (registration notification area), a cell list, one or more TAs (a plurality of TAs configured for a same satellite in an NTN network), a last serving (last serving) cell, a last serving (last serving) satellite, or the like. "A paging attempt area is unreachable" means that no UE is paged in the foregoing area, or the UE fails to be paged in any one of the foregoing areas.

The core network device maintains an alert timer, and starts timing when the core network side triggers a paging procedure for specific UE. If a response from the UE is received in a timing process, the timing is stopped. If no response from the UE is received after the timer expires, an alert procedure is triggered. Timing duration of the alert timer may be set according to an actual requirement, for example, set to 5s.

In an example embodiment, the alert triggering policy may further include that a paging cause is a voice service or an important paging. In this way, the core network side measures whether the alert triggering policy is met only when the core network side determines that the paging cause is voice paging or important paging.

S213: The core network device sends an alert command to the at least one radio access network device in the area.

After determining that the current state meets the alert triggering policy, the core network side sends the alert command to the one or more access network devices in the area in which the UE is located. The alert command is used to instruct the access network device to send an alert message to the UE.

In some embodiments, the alert command may further include an indication for increasing a transmit power of the access network device. For example, the indication may include at least one of the following information: a specified transmit power, a transmit power ramp-up step (a power step increased for each paging failure), a transmit power level, or the like. The radio access network device increases the transmit power based on the indication, to improve UE reachability. For a specific implementation of increasing the transmit power by the radio access network, refer to related content in S111 in the embodiment shown in FIG. 2. Details are not described herein again.

S214: The at least one radio access network device sends an alert message to the UE.

After receiving the alert command sent by the core network side, the access network device in the area in which the UE is located sends an alert message to the UE. For a processing procedure after the UE receives the alert message, refer to related content in S108. Details are not described herein again.

In some embodiments, a maximum number of sending times may be further set. A maximum value of a number of times of sending an alert message to the same UE is, for example, 3. The maximum number of sending times may be specified in a protocol, or may be determined by the core network device and sent to the access network device. After receiving the alert command sent by the core network device, the access network device may repeatedly send the alert message to the UE a plurality of times. Each time the access network device sends the alert message, the access network device determines whether the maximum number of sending times is exceeded, and if the maximum number of sending times is exceeded, no longer sends the alert message to the UE.

In the communication method provided in this embodiment, the core network device determines whether to send the alert message to the UE. In this way, the core network side device may make a decision by comprehensively considering information reported by all radio access network devices in an area in which the UE is located. This method is applicable to a scenario in which a communication system includes a plurality of cells or a plurality of satellite cells. This avoids a false alert caused by measuring, based on paging information of only one radio access network device, whether the alert triggering policy is met, thereby reducing a false alert rate. In addition, in this solution, a plurality of base stations in the same area can be controlled to send alert messages to the UE, thereby improving an arrival rate of an alert message.

Further, in the method, the core network side can measure whether the alert triggering policy is met only in a case of voice paging or important paging, so that signaling overheads can be reduced. In addition, in this solution, an alert procedure is triggered only for voice paging or important paging, and no alert is triggered for paging of another service type. In this way, other UEs in the cell do not receive such alerts. Therefore, a number of times of receiving an alert message by other UEs is reduced. That is, a false alert probability is reduced. Further, in this solution, the transmit power for sending the alert message by the base station can be increased, thereby improving UE reachability.

The following describes content related to configuration information for an alert message monitoring position.

A configuration for the alert message monitoring position is used to notify the UE of monitoring, in the received message, whether a specific position of the alert message exists. The monitoring position may include a reference point and an offset (offset).

In a possible implementation, the reference point may be a reference frame determined based on a start position of the 1^{st} paging frame (Paging Frame, PF) in one time of paging, and the offset is an offset from the reference point to a start frame of the 1^{st} PDCCH monitoring occasion (PDCCH monitoring occasion, MO) in the alert slot. A paging occasion (Paging Occasion, PO) refers to a specific subframe. In this subframe, a P-RNTI is sent on a physical downlink control channel (Physical Downlink Control Channel, PDCCH) to indicate a corresponding paging message on the PDCCH. The PF is a radio frame that may contain one or more paging occasions.

In this way, only related UE needs to receive or not receive a subsequent paging message, thereby reducing energy consumption on the UE side. For example, if the alert message is included at the monitoring position, the related UE does not need to monitor a subsequent paging message in a specific time. For another example, if the alert message is not included at the monitoring position, the related UE needs to monitor a subsequent paging message. Moreover, in this implementation, the network side only needs to send the alert message at the monitoring position, without a need to send a subsequent paging message, and the paging message may be sent after a period of time, thereby reducing power consumption of a network side.

In another possible implementation, the reference point may be a reference frame determined based on an end position of a last PF in one time of paging, and the offset is an offset from the reference point to the 1^{st} PDCCH MO end frame in the alert slot. In this implementation, the network side may deliver an alert message based on a result of a previous round of paging, thereby reducing a paging delay, and may send an alert message at a plurality of related positions subsequently.

In still another possible implementation, a position for monitoring the alert message may be predefined, that is, a predefined position. The predefined position may include a reference point (or referred to as a reference position) and an offset. For example, the reference point may be a position of a system message. For example, a position of a system information block (system information block 1, SIB1) is used as the reference point, the offset may be preconfigured or predefined. SIB1 is a type of information dedicated to controlling and managing an LTE system.

In still another possible implementation, a fixed time domain position, frequency domain position, and code domain position may be set. For example, an alert message may be set to be sent at a position of a guard band (guard band).

In addition, a trigger condition (or referred to as a monitoring trigger condition) for the UE to start monitoring the alert message may include any one of the following:
if a signal of a serving cell signal falls below a specific threshold, monitoring the alert message begins at a preconfigured monitoring position; or
if a RAN-based notification area update (RAN-based Notification Area Update, RNAU) failure or routing area update (Routing Area Update, RAU) failure occurs periodically, monitoring the alert message begins at the preconfigured position.

It can be learned that after the monitoring trigger condition is set, the UE monitors the alert message at a configured monitoring position only after detecting that a current status meets this condition, thereby reducing power consumption of the UE.

When the integrated unit is implemented in the form of the software functional unit and sold or used as an independent product, the integrated unit may be stored in a computer-readable storage medium. Based on such an understanding, the technical solutions of the embodiments essentially, or the part contributing to the related art, or all or some of the technical solutions may be implemented in the form of a software product. The computer software product is stored in a storage medium and includes several instructions for instructing a computer device (which may be a personal computer, a server, a network device, or the like) or a processor to perform all or some of the steps of the methods described in the embodiments. The storage medium includes any medium capable of storing program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be determined by the protection scope of the claims.

## Claims

1. A communication method, applied to a core network device, wherein the method comprises:
sending, to at least one access network device, alert-related information related to UE, wherein the alert-related information is used by the at least one access network device to send an alert message to the UE when it is determined that paging of the UE fails.

2. The method according to claim 1, wherein the alert-related information comprises an alert command, and the alert command is used to instruct the access network device to send the alert message.

3. The method according to claim 2, wherein the alert command is sent by the core network device after it is determined that paging of the UE fails.

4. The method according to claim 2 or 3, wherein the alert-related information further comprises an alert reporting condition, the alert reporting condition is used to trigger the access network device to send a UE no-response indication to the core network device, and the alert reporting condition comprises at least one of the following: a number of paging times is greater than a first threshold, or no reply from the UE is received within first preset duration.

5. The method according to any one of claims 2 to 4, wherein sending alert-related information to at least one access network device in an area in which the UE is located comprises:
when it is determined that paging of the UE meets a first alert triggering policy, sending, by the core network device, the alert command to the at least one access network device in the area in which the UE is located.

6. The method according to claim 5, wherein the first alert triggering policy comprises at least one of the following: a total number of paging times is greater than or equal to a second threshold, a number of paging attempts is greater than or equal to a third threshold, no reply from the UE is received within second preset duration, a paging attempt area is unreachable, or a maximum number of sending times applies, wherein the total number of paging times is a sum of numbers of paging times of all access network devices in the area in which the UE is located, and the maximum number of sending times is used to limit a number of times of sending an alert message to the UE.

7. The method according to claim 1, wherein the alert-related information further comprises a maximum number of sending times, and the maximum number of sending times is used to limit a number of times of sending an alert message to the UE.

8. The method according to claim 6, wherein the first alert triggering policy further comprises that a paging cause is a voice service or important paging.

9. The method according to claim 1, wherein the alert-related information further comprises power information, and the power information comprises a specified transmit power, a transmit power level, or a transmit power ramp-up step.

10. The method according to claim 1 or 7, wherein the alert-related information comprises a second alert triggering policy, the second alert triggering policy is used to enable the access network device to decide whether to send an alert message to the UE, and the second alert triggering policy comprises at least one of the following: a number of paging times is greater than or equal to a fourth threshold, no reply from the UE is received within third preset duration, or a number of paging attempts is greater than or equal to an expected number of paging attempts.

11. The method according to claim 10, wherein the second alert triggering policy further comprises that a paging cause is a voice service or important paging.

12. A communication method, applied to an access network device, wherein the method comprises:
receiving alert-related information sent by a core network device, and sending an alert message to UE, wherein the alert-related information is used by at least one access network device to send an alert message to the UE when it is determined that paging of the UE fails.

13. The method according to claim 12, wherein the alert-related information comprises an alert command; and
the access network device sends an alert message to the UE based on the alert command sent by the core network device.

14. The method according to claim 13, wherein the alert-related information further comprises an alert reporting condition, and the alert reporting condition comprises at least one of the following: a number of paging times is greater than a first threshold, or no reply from the UE is received within first preset duration.

15. The method according to claim 14, wherein the access network device sends a UE no-response indication to the core network device after it is determined that the alert reporting condition is met, wherein the UE no-response indication comprises at least one of the following: no response from the UE, or a number of paging times.

16. The method according to claim 12, wherein the alert-related information comprises an alert triggering policy, and the alert triggering policy comprises at least one of the following: a number of paging times is greater than a second threshold, no reply from the UE is received within second preset duration, or a number of paging attempts is greater than or equal to an expected number of paging attempts minus 1.

17. The method according to any one of claims 12 to 16, wherein the alert-related information further comprises a maximum number of sending times, and the maximum number of sending times is used to limit a number of times of sending an alert message to the UE.

18. The method according to claim 17, wherein the receiving the alert-related information sent by the core network device, and sending the alert message to the UE comprises: sending, by the access network device, the alert message when it is determined that the alert triggering policy is met.

19. The method according to claim 18, wherein a process of determining that the alert triggering policy is met comprises:
determining a number of paging times for which a paging message is sent to the UE and no reply from the UE is received, wherein the number of paging times is greater than or equal to the paging times threshold; and/or
no response from the UE is received after the second preset duration has elapsed since a start of paging of the UE; and/or
receiving a number of paging attempts sent by the core network device, wherein the number of paging attempts is greater than or equal to the expected number of paging attempts minus 1.

20. The method according to any one of claims 12 to 19, wherein the sending the alert message to the UE comprises: adjusting a transmit power based on power information, and sending the alert message by using an adjusted transmit power.

21. The method according to claim 20, wherein the power information comprises a specified transmit power, a transmit power level, or a transmit power ramp-up step.

22. The method according to claim 21, wherein the adjusting the transmit power based on the power information, and sending the alert message by using the adjusted transmit power comprises:
sending the alert message by using the specified transmit power; or
sending the alert message by using a transmit power corresponding to the transmit power level; or
successively increasing a transmit power based on the power ramp-up step, until an enhanced transmit power reaches a maximum specified power, or a number of times of enhancing the transmit power reaches a maximum specified number of times, or a reply from the UE is received.

23. The method according to any one of claims 12 to 22, wherein the sending the alert message to the UE comprises: sending the alert message at a preset position.

24. The method according to claim 23, wherein the preset position comprises a reference position and an offset; and
the reference position is a reference position determined based on a start position of a 1^{st} paging frame in one paging, and the offset is an offset from the reference position to a start frame of a 1^{st} monitoring occasion in an alert slot; or
the reference position is a reference position determined based on an end position of a last paging frame in one paging, and the offset is an offset from the reference position to an end frame of a last monitoring occasion in an alert slot; or
the reference position is a reference position determined based on a position of a system information block SIB1, and the offset is an offset from the reference position to an alert slot.

25. The method according to claim 23, wherein the preset position is a preset fixed time domain position, a fixed frequency domain position, or a fixed code domain position.

26. The method according to any one of claims 12 to 25, wherein before the sending the alert message to the UE, the method further comprises: sending alert configuration information to the UE.

27. The method according to claim 26, wherein the alert configuration information comprises: a monitoring position related configuration and a UE-related index, wherein the monitoring position related configuration is used to indicate a position at which the UE monitors the alert message, and the UE-related index is used to indicate UE that receives the alert configuration information.

28. The method according to claim 27, wherein the UE-related index comprises at least one of the following: an inactive radio network temporary identifier I-RNTI, a preconfigured UE index, a cell radio network temporary identifier C-RNTI, or an area index.

29. The method according to claim 27 or 28, wherein the monitoring position related configuration is sent by using a system message, or the monitoring position related configuration is sent by using first dedicated signaling; and the UE-related index is sent by using second dedicated signaling.

30. A communication method, applied to user equipment, wherein the method comprises:
receiving an alert message sent by an access network device, wherein the alert message is sent by the access network device when a network side device determines that paging of the UE fails, and the network side device comprises the access network device or a core network device.

31. The method according to claim 30, wherein the method further comprises: monitoring the alert message at a preset position.

32. The method according to claim 31, wherein the monitoring the alert message at the preset position comprises:
monitoring the alert message when it is detected that signal quality of a serving cell is less than a preset threshold; or
monitoring the alert message when it is detected that a radio access network notification area update or routing area update periodically fails.

33. The method according to claim 31 or 32, wherein the method further comprises: receiving alert configuration information sent by the access network device, wherein the alert configuration information comprises a monitoring position related configuration and a UE-related index.

34. The method according to any one of claims 30 to 33, wherein the method further comprises: sending first information to the access network device or the core network device, wherein the first information is used to indicate that the UE is capable of receiving an alert message.

35. The method according to claim 30, wherein after the receiving the alert information sent by the access network device, the method further comprises at least one of the following:
initiating, to a network side device, a request for restoring a connected state; or
indicating, to an upper layer, that an alert message is received, wherein the upper layer triggers an application feedback, and the application feedback comprises at least one of the following: vibration or information display.

36. A network side device, comprising a memory and one or more processors, wherein the memory is configured to store program code; and the processor is configured to run the program code, so that the electronic device implements the communication method according to any one of claims 1 to 29, or the communication method according to any one of claims 30 to 35.

37. User equipment, wherein the electronic device comprises: a memory and one or more processors, wherein the memory is configured to store program code; and the processor is configured to run the program code, so that the electronic device implements the communication method according to any one of claims 30 to 35.

38. A computer-readable storage medium, wherein the computer-readable storage medium stores instructions, and when the instructions are run on a network side device, the network side device is enabled to perform the communication method according to any one of claims 1 to 29; or when the instructions are run on user equipment, the user equipment is enabled to perform the communication method according to any one of claims 30 to 35.

39. A chip, comprising: at least one processor and an interface, wherein the interface is configured to receive code instructions, and transmit the code instructions to the at least one processor; and the at least one processor runs the code instructions, to implement the communication method according to any one of claims 1 to 29.

40. A chip, comprising: at least one processor and an interface, wherein the interface is configured to receive code instructions, and transmit the code instructions to the at least one processor; and the at least one processor runs the code instructions, to implement the communication method according to any one of claims 30 to 35.
